# EUROPÄISCHE PATENTANMELDUNG

(11) **EP 3 431 378 A1**
(43) Veröffentlichungstag der Anmeldung: **23.01.2019**
(21) Anmeldenummer: 18169423.3
(22) Anmeldetag: 26.04.2018
(51) Int. Cl.: B62K 27/00, B62K 27/02

(54) **FALTMECHANISMUS**

(30) Priorität: 21.07.2017 DE 102017116482
(71) Anmelder: Croozer GmbH, 50825 Köln (DE)
(72) Erfinder: Schneider, Georg, 53340 Meckenheim (DE); Harbeke, Christian, 8006 Zürich (CH); Jeuch, Linus, 5400 Baden (CH)
(74) Vertreter: Lenzing Gerber Stute

(57) **Zusammenfassung**

Die vorliegende Erfindung betrifft ein faltbares Rahmengestell für ein Fahrzeug, insbesondere für einen ein- oder zweispurigen Fahrradanhänger, mit mindestens einer mindestens vier Profilabschnitte aufweisenden Rahmenstruktur, wobei an jedem Profilabschnitt mindestens zwei Verbindungspunkte vorgesehen und benachbarte Profilabschnitte an einander zugeordneten Verbindungspunkten mindestens in einer Betriebsposition über gelenkige Verbindungsmittel miteinander verbunden sind, so dass sie einen geschlossenen Rahmen bilden, und wobei Mittel zum Aussteifen der Rahmenstruktur vorgesehen sind, sowie einen mit einem solchen Rahmengestell ausgestatteten Fahrradanhänger.

Um ein solches Rahmengestell zur Verfügung zu stellen, das eine Raumform ermöglicht, deren Höhe in Fahrtrichtung vorn und hinten frei wählbar und insbesondere unabhängig von der Spurbreite des Fahrradanhängers ist, und das gleichzeitig flach zusammenfaltbar ist, ebenso wie einen damit ausgestatteten ein- oder zweispurigen Fahrradanhänger, wird vorgeschlagen, dass mindestens einer der Profilabschnitte ein erster Profilabschnitt und die dazu unmittelbar benachbarten Profilabschnitte zweite Profilabschnitte sind, mit denen der erste Profilabschnitt mindestens in der Betriebsposition verbunden ist, und dass der Abstand der Verbindungspunkte der zweiten Profilabschnitte, die den Verbindungspunkten des ersten Profilabschnitts zugeordnet sind, veränderlich und in Betriebsposition festlegbar ist. Die Aufgabe wird auch gelöst mit einem Fahrradanhänger gemäß Anspruch 12.

## Beschreibung

Die vorliegende Erfindung betrifft ein faltbares Rahmengestell für ein Fahrzeug, insbesondere für einen ein- oder zweispurigen Fahrradanhänger, mit mindestens einer mindestens vier Profilabschnitte aufweisenden Rahmenstruktur, wobei an jedem Profilabschnitt mindestens zwei Verbindungspunkte vorgesehen und benachbarte Profilabschnitte an einander zugeordneten Verbindungspunkten mindestens in einer Betriebsposition über gelenkige Verbindungsmittel miteinander verbunden sind, so dass sie einen geschlossenen Rahmen bilden, und wobei Mittel zum Aussteifen der Rahmenstruktur vorgesehen sind, sowie einen mit einem solchen Rahmengestell ausgestatteten Fahrradanhänger.

Fahrradanhänger sind aufgrund ihrer vielfältigen Anwendungsmöglichkeiten sehr beliebt. Weit verbreitet sind Fahrradanhänger zum Transport von Kindern.

Aus der DE 102 42 438 C1 ist ein Fahrradanhänger mit einem Chassis, einer darauf angeordneten faltbaren Fahrgastzelle und darin vorgesehenen, ebenfalls faltbaren Sitzen für Kinder bekannt. Die Fahrgastzelle wird gebildet durch zwei gelenkig miteinander verbundene und gegeneinander aussteifbare, rückseitige Rahmenteile sowie einem gebogenen Rahmenteil, der an der Vorderseite des Chassis angelenkt ist und bis zum oberen Ende des oberen der rückseitigen Rahmenteile verläuft. Die Rahmenteile bilden zusammen mit dem Chassis eine geschlossene Rahmenstruktur. Die Form der sich daraus ergebenden Fahrgastzelle ist an den Platzbedarf sitzender Kinder angepasst ist, also von der Seite betrachtet im Wesentlichen dreieckig. Die Fahrgastzelle lässt sich flach zusammenfalten, um den Platzbedarf des Fahrradanhängers bei der Lagerung zu reduzieren, in dem die rückseitigen Rahmenteile aufeinander gefaltet werden und dann flach im Bereich des Chassis zu liegen kommen, wobei auch der gebogene Rahmenteil entsprechend in Richtung des Chassis verschwenkt und darüberliegt. Die Höhe der gefalteten Rahmenstruktur wird im Wesentlichen durch den Bogen des gebogenen Rahmenteils 4 bestimmt.

Ein ähnlicher Fahrradanhänger zum Transport von Kindern ist aus der CN 170 67 13 A1 bekannt. Die Fahrgastzelle dieses Fahrradanhängers ist ähnlich zu der aus der DE 102 42 438 C1 bekannten Fahrgastzelle aufgebaut, wobei statt der rückseitigen Rahmenteile an beiden Längsseiten des Chassis jeweils eine Teleskopstange vorgesehen ist. Zum Zusammenlegen des Fahrradanhängers werden die Teleskopstangen zusammengeschoben, wodurch der gebogene Rahmenteil zur Anlage an das Chassis gebracht werden kann. Die Höhe des gefalteten Anhängers wird dann wiederum durch den Bogen des gebogenen Rahmenteils bestimmt.

Des Weiteren sind Fahrradanhängern zum Transport von Hunden oder von Gepäck bekannt. Der Transport von Hunden bedingt andere Anforderungen an die Raumgestaltung des Anhängers als das beim Transport von Kindern der Fall ist, da die Hunde im Anhänger sowohl stehen, sitzen als auch liegen können sollen. Dies erfordert einen Transportraum, der sowohl in Fahrtrichtung vorn als auch hinten etwa gleich hoch ist, also einen Raum, der von der Seite betrachtet im Wesentlichen viereckig bzw. rechteckig ist.

Ein Fahrradanhänger für Hunde ist beispielsweise aus der DE 20 2007 014 178 U1 bekannt. Der Transportraum wird bei diesem Fahrradanhänger aus dem Chassis und zwei seitlichen Rahmenteilen gebildet, die seitlich am Chassis befestigt sind und über Gelenke in eine Position parallel zum Chassis verschwenkt werden können. In aufgestellter Position werden die seitlichen Rahmenteile über eine an ihrer Oberseite angeordneten Querstrebe gehalten. Nachteilig an diesem Anhänger ist, dass die Höhe des Transportraums aufgrund des Faltmechanismus durch die Spurbreite des Anhängers begrenzt ist. Deshalb ist dieser Anhänger nicht ohne weiteres für Große Tiere geeignet.

Der vorliegenden Erfindung liegt die Aufgabe zu Grunde, ein Rahmengestell der eingangs genannten Art zur Verfügung zu stellen, das eine Raumform ermöglicht, deren Höhe in Fahrtrichtung vorn und hinten frei wählbar und insbesondere unabhängig von der Spurbreite des Fahrradanhängers ist, und das gleichzeitig flach zusammenfaltbar ist, ebenso wie einen damit ausgestatteten ein- oder zweispurigen Fahrradanhänger.

Diese Aufgabe wird bei einem Rahmengestell mit den Merkmalen des Anspruchs 1 dadurch gelöst, dass mindestens einer der Profilabschnitte ein erster Profilabschnitt und die dazu unmittelbar benachbarten Profilabschnitte zweite Profilabschnitte sind, mit denen der erste Profilabschnitt mindestens in der Betriebsposition verbunden ist, und dass der Abstand der Verbindungspunkte der zweiten Profilabschnitte, die den Verbindungspunkten des ersten Profilabschnitts zugeordnet sind, veränderlich und in Betriebsposition festlegbar ist. Die Aufgabe wird auch gelöst mit einem Fahrradanhänger gemäß Anspruch 12.

Unter dem Begriff "Verbindungspunkt" wird hier und im Folgenden die Stelle an einem Profilabschnitt verstanden, an der er mit einem anderen Profilabschnitt im Betriebszustand, also bei aufgefalteter und arretierter Rahmenstruktur, verbunden ist.

Der Erfindung liegt der Gedanke zugrunde, dass es bei einer Rahmenstruktur mit mindestens vier gelenkig miteinander verbundenen Profilabschnitten möglich ist, die Länge von mindestens zwei der Profilabschnitte unabhängig von der Länge der anderen beiden Profilabschnitte zu wählen und die Rahmenstruktur gleichzeitig vergleichsweise kompakt zusammenfalten zu können, wenn der durch einen ersten Profilabschnitt bestimmte feste Abstand zweier Profilabschnitte, die über den ersten Profilabschnitt miteinander verbunden sind, aufgehoben wird.

Natürlich muss der Abstand der den Verbindungspunkten des ersten Profilabschnitts in Betriebsposition zugeordneten Verbindungspunkte der zweiten Profilabschnitte in mindestens einer Position des ersten Profilabschnitts und der zweiten Profilabschnitte zueinander festlegbar sein, damit die Rahmenstruktur in der Betriebsposition eine feste und definierte Form hat.

Es gibt zahlreiche Möglichkeiten, um zum Zusammenfalten der Rahmenstruktur den Abstand der Verbindungspunkte der zweiten Profilabschnitte, die den Verbindungspunkten des ersten Profilabschnitts zugeordnet sind, zu verändern.

Eine erste, sehr einfache Möglichkeit besteht darin, dass die Verbindung zwischen dem ersten Profilabschnitt und einem der beiden zweiten Profilabschnitte lösbar ist. Somit wird zum Falten des Rahmengestells der geschlossene Rahmen geöffnet. Der erste Profilabschnitt kann dann auf den zweiten Profilabschnitt geklappt werden, mit dem der erste Profilabschnitt verbunden ist, und dieser zweite Profilabschnitt kann dann auf den Profilabschnitt geklappt werden, der dem ersten Profilabschnitt gegenübergelegen hat. Der weitere zweite Profilabschnitt, dessen Verbindung zum ersten Profilabschnitt gelöst wurde, kann ebenso auf den Profilabschnitt geklappt werden, der dem ersten Profilabschnitt gegenübergelegen hat. Ist die Rahmenstruktur rechteckig, wird somit der erste Profilabschnitt entweder beim Falten einmal um seine mittlere Querachse umgedreht, oder er liegt parallel verschoben auf dem ihm gegenüberliegenden Profilabschnitt auf.

Bei dieser Ausführungsform kann die lösbare Verbindung entweder als gelenkige Verbindung, gegebenenfalls aber auch als steckbare Winkelverbindung ausgeführt sein. Letzteres hat den Vorteil, dass zwar alle Profilabschnitte gelenkig miteinander verbunden sind und sie zu einem Paket zusammengefaltet werden können, und die Rahmenstruktur gleichzeitig, nachdem sie aufgefaltet und über die Winkelverbindung geschlossen wurde, ausgesteift ist, ihre Betriebsposition also automatisch beibehält.

In einer anderen einfachen Ausführungsform kann der erste Profilabschnitt aus mehreren Teilen bestehen, wobei er zwischen seinen Verbindungspunkten auftrennbar und miteinander verbindbar ist. Die auftrennbaren Teile eines solchen ersten Profilabschnitts können auf verschieden Arten miteinander lösbar verbunden werden, zum Beispiel Klemmverbindungen, Steckverbindungen, Stiftverbindungen oder Schraubverbindungen.

In einer bevorzugten Ausführungsform der Erfindung ist die Länge des ersten Profilabschnitts zwischen den Verbindungspunkten veränderbar, insbesondere ist der erste Profilabschnitt teleskopartig ausgebildet. Diese Ausführungsform ermöglicht ein Zusammenfalten der geschlossenen Rahmenstruktur. Daraus ergibt sich der Vorteil gegenüber einer Lösung mit voneinander lösbaren Teilen, dass keine Teile der Rahmenstruktur zusammengeführt und zusammengefügt werden müssen. Dadurch wird die Bedienung der Rahmenstruktur beim Zusammenfalten und Auffalten besonders einfach. Die Teleskopstange kann zum Beispiel auf einfache Weise mit einem Federstift arretiert und händisch, beispielsweise über einen Druckknopf, gelöst werden. Eine solche Lösung ist besonders geeignet, wenn die Rahmenstruktur von einer Hülle ummantelt ist, da ein Druckknopf einfach durch eine Öffnung in der Hülle oder durch die Hülle hindurch betätigt werden kann.

Bei einer weiteren erfindungsgemäßen Ausführungsform ist die Position mindestens eines mit dem ersten Profilabschnitt verbundenen gelenkigen Verbindungsmittel veränderbar. Zum Beispiel kann das gelenkige Verbindungsmittel entlang des ersten Profilabschnitts verschoben und dabei schienenartig geführt und in einer Position arretierbar sein. Auch bei dieser Ausführungsform ist eine einfache Bedienung gegeben. Das gelenkige Verbindungsmittel und der erste Profilabschnitt können so beschaffen sein, dass der Abstand der beiden Verbindungspunkte des ersten Profilabschnitts entlang der gesamten Länge des ersten Profilabschnitts variiert werden kann. Auch eine Arretierung des Verbindungspunktes oder Verbindungsmittels in zumindest einer Position ist einfach beispielsweise über einen Klemmmechanismus oder einen Arretierstift möglich.

Eine weitere bevorzugte Ausgestaltung des erfindungsgemäßen faltbaren Rahmengestells ist gekennzeichnet durch zu beiden Seiten des Rahmengestells achssymmetrisch zu seiner Längsachse angeordnete Rahmenstrukturen. Die Profilabschnitte jeder der Rahmenstrukturen sind in diesem Fall jeweils einzelne Streben. Um ein steifes Rahmengestell in der Betriebsposition zu gewährleisten, sind mindestens zwei miteinander korrespondierende, im Wesentlichen parallel geführte Streben der beiden seitlichen Rahmenstrukturen über eine Querstrebe miteinander verbunden. Vorzugsweise sind derartige Querstreben an zwei der mehr Stellen über die an den Seiten des Rahmengestells angeordnete Rahmenstrukturen verteilt vorgesehen, um eine ausreichende Stabilität des Rahmengestells zu erreichen.

In einer dazu alternativen und ebenso bevorzugten Ausgestaltung ist mindestens einer der Profilabschnitte und sind insbesondere alle Profilabschnitte jeweils aus einem vierseitigen, insbesondere im Wesentlichen rechteckigen Rahmen gebildet, die sich im Wesentlichen quer zur Schwenkrichtung der Profilabschnitte erstrecken. In diesem Fall können benachbarte Profilabschnitte besonders vorteilhaft mit jeweils einem breiten Verbindungselement miteinander verbunden werden, um so eine einfache, kostengünstige und stabile Konstruktion zu schaffen. Auch bietet diese Ausführungsform einfachere Möglichkeiten, den ersten Profilabschnitt in seiner Länge veränderbar zu gestalten, derart, dass der Mechanismus einfach zu bedienen ist. Ist zum Beispiel der erste Profilabschnitt aus einem vierseitigen, im Wesentlichen rechteckigen, Rahmen gebildet und sind zwei gegenüberliegende Seiten des Profilabschnitts als Teleskopstangen ausgebildet, sind die Teleskopstangen an beiden Enden miteinander verbunden sind, so dass ihre Bewegungen beim Zusammenschieben oder Auseinanderziehen dann korrespondieren, was die Handhabung vereinfachen kann. Es sind aber ebenso Ausführungsformen bevorzugt, bei denen der erste Profilabschnitt als einfache Teleskopstange ausgebildet ist, und die damit verbundenen zweiten Profilabschnitte jeweils vierseitige Rahmen sind.

Bei allen Ausführungsformen können das Chassis des Fahrzeugs oder Teile davon Bestandteil der Rahmenstruktur sein. Das Chassis oder Teile davon bilden dann einen unteren Profilabschnitt der Rahmenstruktur, mit dem die anderen mindestens drei Profilabschnitte verbunden sind. Alternativ ist es auch möglich, dass die Rahmenstruktur aus vier oder mehr, einen geschlossenen Rahmen bildenden Profilabschnitten besteht und einer der Profilabschnitte am Chassis befestigt ist.

Die vier Profilabschnitte der Rahmenstruktur sind typischerweise ein unterer Profilabschnitt als im Wesentlichen horizontale Basis der Rahmenstruktur, ein in Fahrtrichtung vorderer Profilabschnitt, der mit dem unteren Profilabschnitt gelenkig verbunden ist und in Betriebsposition vorzugsweise im Wesentlichen vertikal verläuft, ein in Fahrtrichtung hinterer Profilabschnitt, der ebenso mit dem unteren Profilabschnitt gelenkig verbunden ist und in Betriebsposition vorzugsweise im Wesentlichen vertikal verläuft, und ein oberer Profilabschnitt, der mit den in Betriebsposition oberen Enden des vorderen und des hinteren Profilabschnitts verbunden ist.

In einer grundsätzlich möglichen Ausführungsform der Erfindung bilden wahlweise der vordere und oder der hintere Profilabschnitt einen ersten Profilabschnitt im Sinne der Erfindung, so dass der obere und der untere Profilabschnitt jeweils zweite Profilabschnitte sind.

Bevorzugt, weil in Handhabung und Konstruktion einfacher, ist allerdings eine Ausführungsform, bei der der obere Profilabschnitt der erste Profilabschnitt und der vordere und der hintere Profilabschnitt die zweiten Profilabschnitte sind. Diese Ausführungsform ermöglicht es, verschiedenen Längenverhältnissen zwischen den vertikalen und den horizontalen Profilabschnitten zu wählen und in allen Fällen die Profilabschnitte in der Lagerungsposition, in der das Rahmengestell vollständig zusammengefaltet ist, vorteilhaft innerhalb der oder nur mit unwesentlichem Überstand über die durch den unteren Profilabschnitt aufgespannten Fläche zu verstauen, so dass das Rahmengestell in der Lagerungsposition besonders kompakt ist. Im Folgenden wird sich auf diese Ausführungsform bezogen.

In einer besonders für Fahrradanhänger für den Transport von Hunden geeigneten Ausführungsform des erfindungsgemäßen Rahmengestells weichen die Länge des vorderen Profilabschnitts und die Länge des hinteren Profilabschnitts weniger als 25 % voneinander ab. Besonders bevorzugt ist der vordere Profilabschnitt gleich lang oder länger als der in Fahrtrichtung hintere Profilabschnitt. Bei letzterer Ausführungsform wird es dem Hund oder den Hunden ermöglicht, in dem Anhänger mit seinem Kopf in Fahrtrichtung zu stehen oder zu sitzen.

Zur Versteifung der Rahmenstruktur in der Betriebsposition des Rahmengestells gibt es verschiedene Möglichkeiten.

In einer vorteilhaften Ausführungsform sind als Mittel zum Aussteifen der Rahmenstruktur Mittel zur Versteifung der gelenkigen Verbindungsmittel vorgesehen. Dies können zum Beispiel Klemmvorrichtungen oder Klemmschrauben sein, die die gegeneinander bewegliche Gelenkteile so zusammenpressen, dass ein Reibschluss entsteht, oder Sperrstifte, mit denen die gegeneinander beweglichen Gelenkteile formschlüssig gesperrt werden. Vorteilhaft bei dieser Ausführungsform ist, dass keine Mittel zum Aussteifen zwischen den Profilabschnitten vorgesehen werden müssen und somit eine geringere Anzahl von Bauteile benötigt wird.

Eine andere und besonders bevorzugte Möglichkeit zur Versteifung der Rahmenstruktur in der Betriebsposition des Rahmengestells besteht darin, mindestens zwei flexible, auf Zug beanspruchbare Elemente vorzusehen, wobei die auf Zug beanspruchbaren Element so angeordnet sind, dass die Profilabschnitte zueinander in ihrer Betriebsposition in der Ebene der Rahmenstruktur ausgesteift sind, indem sie das Verschwenken von Profilabschnitten über die Betriebsposition hinaus entgegen der Schwenkrichtung beim Zusammenfalten sperren. Flexible, auf Zug belastbare Elemente haben gegenüber starren Stegen, die ebenso zur Aussteifung der Rahmenstruktur verwendet werden können, den Vorteil, dass sie einem Zusammenfalten der Rahmenstruktur nicht entgegenstehen. In Zusammenwirkung mit der Arretierung des ersten Profilabschnitts, die in der Betriebsposition eine Bewegung der zweiten Profilabschnitte auch in der Faltrichtung verhindert, ist damit in der Betriebsposition ein steifer Rahmen geschaffen.

Als auf Zug belastbare Elemente kommen insbesondere Gurte, Riemen oder Seile in Betracht.

Alternativ oder in Ergänzung zu den auf Zug belastbaren Elementen ist es ebenso möglich, mindestens eines der gelenkigen Verbindungen derart auszugestalten, dass es beim Auffalten der Rahmenstruktur ein Verschwenken der Profilabschnitte über die Betriebsposition hinaus sperrt.

Ein mit einem zuvor beschriebenen erfindungsgemäßen faltbaren Rahmengestell ausgestatteter, ein- oder zweispuriger Fahrradanhänger ist vorzugsweise mit einer das Rahmengestell ummantelnden Hülle, insbesondere aus Stoff und/oder Kunststoff, versehen, die den von dem Rahmengestell in seiner Betriebsposition aufgespannten Raum umschließt. Derartige Hüllen kommen bei Fahrradanhängern regelmäßig zum Einsatz. Sie haben den Vorteil, das Transportgut vor Wettereinflüssen zu schützen und die Fahrgastzelle bzw. den Transportraum abzuschließen, so dass nichts beim Transport herausfallen kann.

Vorteilhaft können bei der Verwendung des Rahmengestellt bei einem Fahrradanhänger mit einer Hülle in oder an der Hülle Führungen für die Mittel zur Versteifung des Rahmengestells vorgesehen sein. Damit ist gewährleistet, dass die Mittel zur Versteifung der Rahmenstruktur(en) beim Zusammenfalten des Rahmengestells an die Hülle gebunden sind und den Anwender nicht behindern. Weiterhin können sich die Mittel zur Versteifung der Rahmenstruktur(en) beim Zusammenbau des Rahmengestells nicht unbeabsichtigt in einer Schlinge um andere Teile legen und so den Zusammenbau behindern.

In einer besonders einfachen Ausführungsform sind die Mittel zur Versteifung der Rahmenstruktur(en) durch die Hülle gebildet, wobei die Hülle dazu punktuell mit der/den Rahmenstruktur(en)verbunden ist. Da die Hülle ein ohnehin notweniger Bestandteil des Fahrradanhängers ist, können so Bauteile, nämlich andere Mittel zur Versteifung der Rahmenstruktur(en), eingespart werden. In ähnlicher Weise können in der Hülle Führungen für Teile der Profilabschnitte vorgesehen sein, so dass die Hülle beim Zusammenfalten der Bewegung der Profilabschnitte folgt.

Um dem Nutzer des Fahrradanhängers weiter Anwendungsmöglichkeiten seines Fahrzeugs zu bieten, können an dem Rahmengestell Mittel zum Befestigen eines Schiebegriffs und zum Befestigen mindestens eines zusätzlichen Stützrades vorgesehen sein. Damit ist der Fahrradanhänger zu einem Jogger, einem Buggy oder einem Schneewagen umbaubar.

Im Folgenden wird die Erfindung anhand von Figuren, in denen ein bevorzugtes Ausführungsbeispiel der Erfindung dargestellt ist, näher erläutert.

### Es zeigen

Fig. 1 eine perspektivische Ansicht eines Fahrradanhängers mit einem erfindungsgemäßen faltbaren Rahmengestell in seiner Betriebsposition;
Fig. 2 eine perspektivische Ansicht des in Figur 1 dargestellten Fahrradanhängers in seiner Lagerungsposition;
Fig. 3 eine Seitansicht des in die Betriebsposition aufgefalteten Rahmengestells des in den Figuren 1 und 2 dargestellten Fahrradanhängers;
Fig. 4 eine Seitansicht des in Figur 3 dargestellten Rahmengestells in einer ersten Zwischenposition zwischen der Betriebsposition und einer Lagerungsposition, in der das Rahmengestell vollständig zusammengefaltet ist;
Fig. 5 eine Seitansicht des in Figur 3 dargestellten Rahmengestells in einer zweiten Zwischenposition zwischen der Betriebsposition und der Lagerungsposition;
Fig. 6 eine Seitansicht des in Figur 3 dargestellten Rahmengestells in einer dritten Zwischenposition zwischen der Betriebsposition und der Lagerungsposition; und
Fig. 7 eine Seitansicht des in Figur 3 dargestellten Rahmengestells in der Lagerungsposition.

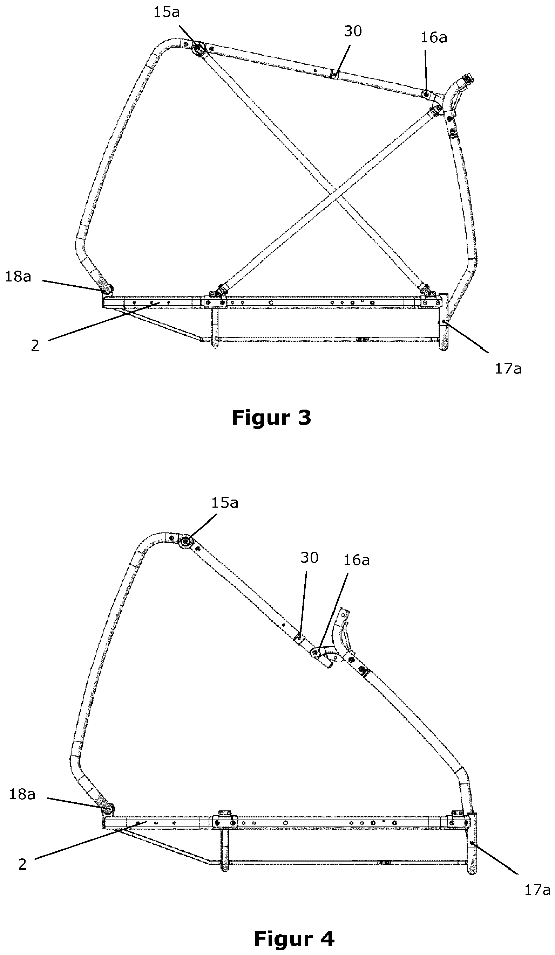

Als Fahrtrichtung wird im Folgenden die in Fig. 3 eingezeichnete Richtung bezeichnet.

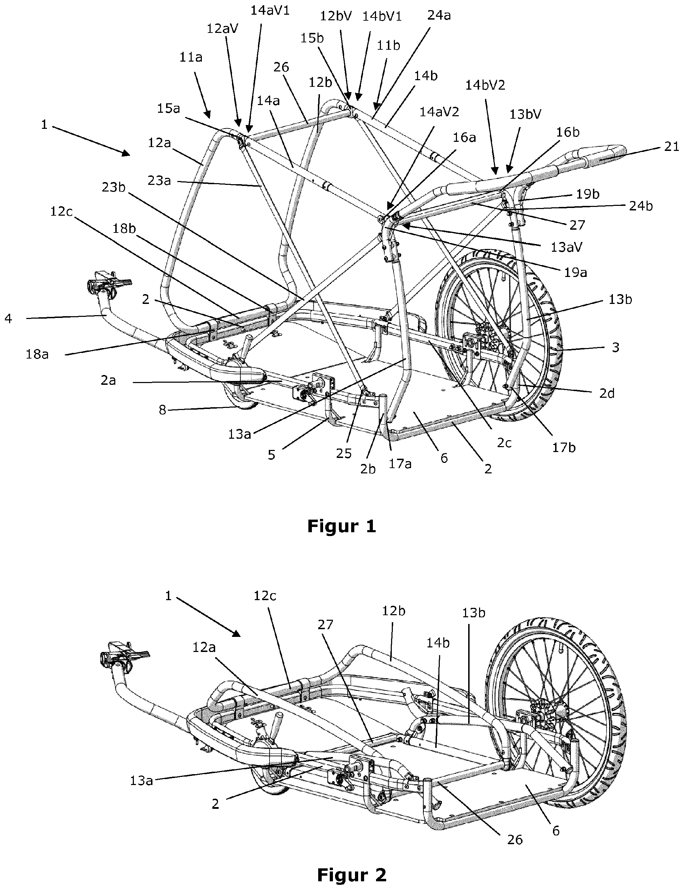

Fig.1 zeigt einen Fahrradanhänger mit einem erfindungsgemäßen faltbaren Rahmengestell 1 in seiner Betriebsposition. Das faltbare Rahmengestell 1 weist ein Chassis 2 auf, an dem in Fahrrichtung hinten die Räder 3 (zur besseren Übersicht ist nur das rechte Rad dargestellt) und vorne die Deichsel 4 des Fahrradanhängers befestigt sind. Außerdem sind am Chassis Träger 5 für einen Boden 6 sowie eine Aufnahme für ein zusätzliches Stützrad 8 befestigt.

Das Rahmengestell 1 weist zwei an seinen Längsseiten angeordnete Rahmenstrukturen 11a, 11b auf. Die Rahmenstrukturen 11a, 11b werden jeweils durch Teile 2a, 2b bzw. 2c, 2d des Chassis als unterem Profilabschnitt, eine in Fahrtrichtung vorn damit verbundene Strebe 12a bzw. 12b als vorderem Profilabschnitt, eine in Fahrtrichtung hinten damit verbundene Strebe 13a bzw. 13b als hinterem Profilabschnitt, und eine die oberen Enden der Streben 12a und 13a bzw. 12b und 13b verbindende obere Strebe 14a bzw. 14b als oberem Profilabschnitt gebildet. Die oberen Streben 14a, 14b sind Teleskopstangen.

Benachbarte Profilabschnitte sind jeweils über Gelenke 15a, 15b, 16a, 16b, 17a, 17b und 18a, 18b miteinander verbunden und damit faltbar.

Die vorderen Profilabschnitte 12a, 12b sind über eine Querstange 12c miteinander verbunden, so dass sie sich, wenn sie zum Ein- oder Ausfalten der Rahmenstruktur verschwenkt werden, synchron bewegen.

An den hinteren Profilabschnitt 13a, 13b sind Halterungen 19a, 19b für einen Schiebegriff 21 sowie der Schiebegriff 21 selbst vorgesehen.

In der Betriebsposition des faltbaren Rahmengestells 1 sind Mittel zur Versteifung der Rahmenstrukturen 11a, 11b vorgesehen. Diese sind bei der dargestellten Ausführungsform als Riemen 23a, 23b und 24a, 24b ausgeführt. Die Länge der Riemen ist über Schnallen 25 einstellbar. Die Riemen 23a, 23b bzw. 24a, 24b verspannen dabei den in Fahrtrichtung hinteren Teil des unteren Profilabschnitts mit dem Gelenk 15a bzw. 15b zwischen dem vorderen und dem oberen Profilabschnitt, und die Riemen 24a, 24b einen vorderen Bereich des unteren Profilabschnitts mit dem oberen Ende des hinteren Profilabschnitts. Die Länge der Riemen 23a, 23b bzw. 24a, 24b ist dabei derart eingestellt, dass die vorderen und hinteren Profilabschnitte beim Auffalten der Rahmenstruktur 1 nicht über die Betriebsposition hinaus verschwenkt werden können.

Zur Versteifung der Rahmenstrukturen 11a, 11b gegeneinander sind im Übrigen eine erste obere Querstrebe 26 zwischen den die vorderen und oberen Profilabschnitte verbindenden Gelenke 15a, 15b und eine zweite obere Querstrebe 27 zwischen den oberen Enden der hinteren Profilabschnitte vorgesehen. Außerdem ist das Chassis 2 als eigenständiger geschlossener Rahmen ausgebildet. Alle oberen Querstreben 26, 27 dienen nicht nur der Versteifung der Rahmenstrukturen 11a, 11b gegeneinander in der Betriebsposition, sondern auch dazu, dass die Rahmenstrukturen 11a, 11b beim Zusammen- und Auffalten synchron bewegt werden.

Die Stellen, an denen die Profilabschnitte gelenkig mit einem benachbarten Profilabschnitt verbunden sind, sind Verbindungspunkte im Sinne der Erfindung. Jeder der vier Profilabschnitte einer Rahmenstruktur 11a bzw. 11b weist zwei Verbindungspunkte 12aV, 12bV, 13aV, 13bV, 14aV1, 14aV2, 14bV1, 14bV2 auf. Der Abstand der beiden in Betriebsposition oberen Verbindungspunkte 14aV1 und 14aV2 bzw. 14bV1 und 14bV2 an den vorderen Profilabschnitten und den hinteren Profilabschnitten ist über die als Teleskopstange ausgebildeten oberen Profilabschnitte veränderlich, nämlich dadurch, dass die Länge der Teleskopstangen verändert wird. Dies ermöglicht, das Rahmengestell in die Lagerungsposition zu falten.

Fig. 2 zeigt den Fahrradanhänger mit dem faltbaren Rahmengestell 1 in seiner Lagerungsposition. Dabei liegen alle Profilabschnitte im Wesentlichen horizontal im Bereich des Chassis 2 und stützen sich auf den Boden 6 ab. Die Teleskopstangen sind dabei in ihrer ineinander geschobenen Stellung. Während die erste obere Querstrebe 26 in der in Fig. 1 dargestellten Betriebsposition in Fahrtrichtung vor der zweiten oberen Querstrebe 27 angeordnet ist, ist sie in der in Fig. 2 dargestellten Lagerungsposition in Fahrrichtung hinter der zweiten oberen Querstrebe 27 angeordnet. Die oberen Profilabschnitte werde demnach bei der Überführung des Rahmengestells zwischen der Betriebsposition und der Lagerungsposition um etwa 180° gedreht.

In Fig. 2 ist weiterhin erkennbar, dass die vorderen Profilabschnitte und die hinteren Profilabschnitte seitlich zueinander versetzt sind, so dass die vorderen Profilabschnitte zwischen den hinteren Profilabschnitten liegen können. Auch ist erkennbar, dass die oberen Profilabschnitte relativ zu den hinteren Profilabschnitten nach innen versetzt sind, damit sie bei der Überführung von der Betriebsposition in die Lagerungsposition aneinander vorbei verschwenkt werden können. Aus diesem Grund sind die oberen Profilabschnitte an den Innenseiten der hinteren Profilabschnitte angebracht.

Die Überführung des faltbaren Rahmengestells von der Betriebsposition in die Lagerungsposition ist in mehreren Zwischenschritten in den Figs. 3 bis 7 in einer Ansicht von der Seite dargestellt. Die Mittel zur Versteifung der Rahmenstrukturen 11a, 11b sind in einigen der Figuren zur besseren Übersicht nicht dargestellt.

Fig. 3 zeigt das faltbare Rahmengestell 1 in seiner Betriebsposition wie bereits in Fig. 1 dargestellt.

Fig. 4 zeigt eine erste Zwischenposition des Überführungsvorganges. Dabei sind die hinteren Profilabschnitte gegenüber der Betriebsposition um etwa 45° um ihr unteres, mit dem Chassis 2 verbundenen Gelenk 17a in Fahrtrichtung nach vorne verschwenkt. Um dies zu ermöglichen, sind die Teleskopstangen etwas zusammengeschoben, so dass der Abstand ihrer Verbindungspunkte 14aV1 und 14aV2 bzw. 14bV1 und 14bV2 gegenüber der Betriebsposition verringert ist. Um die Teleskopstangen ineinander verschieben zu können, müssen deren Arretierungen 30, die als Federstiftarretierungen ausgeführt sind, gelöst werden. Dies kann durch den Anwender in einfacher Weise händisch durchgeführt werden, indem er die federgelagerten Stifte gegen eine Federkraft hinunter drückt und die beiden Teile der jeweiligen Teleskopstange dabei gegeneinander verschiebt.

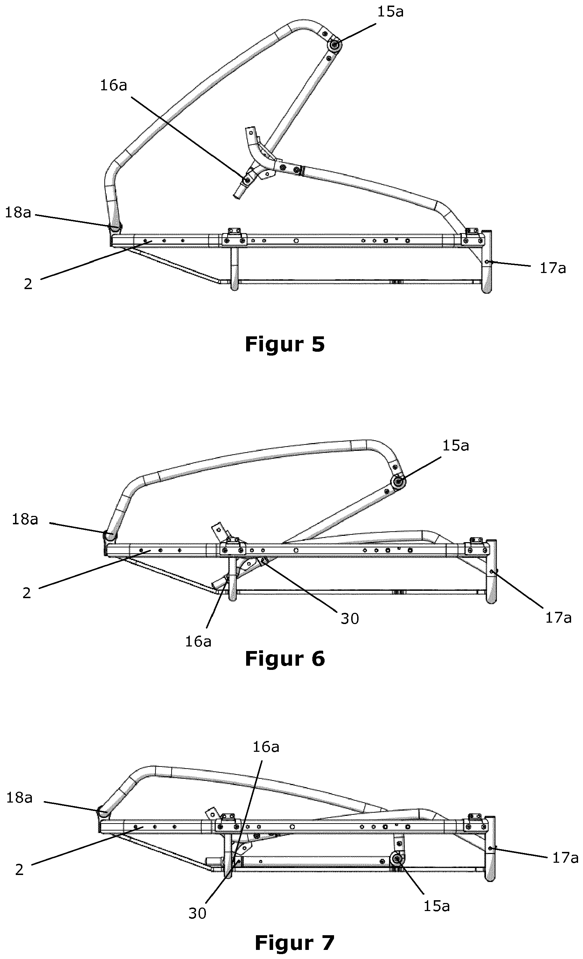

Fig. 5 zeigt eine zweite Zwischenposition des Überführungsvorganges. Die vorderen Profilabschnitte sind gegenüber der Betriebsposition um etwa 30° um ihr unteres Gelenk 18a in Fahrtrichtung nach hinten verschwenkt. Gleichzeitig sind die hinteren Profilabschnitte etwa um weitere 30° entsprechend dem vorherigen Schritt verschwenkt. Die Teleskopstangen sind auf ihre kürzeste mögliche Länge ineinandergeschoben und gegenüber der Betriebsposition um etwa 120° im Uhrzeigersinn gedreht.

Fig. 6 zeigt eine dritte Zwischenposition des Überführungsvorganges. Dabei sind sowohl die vorderen Profilabschnitte als auch die hintern Profilabschnitte weiter entsprechend den vorherigen Schritten verschwenkt.

In Fig. 7 ist die Lagerungsposition des Rahmengestells dargestellt. Dabei befinden sich alle Profilabschnitte in einer im Wesentlichen horizontalen Lage und liegen im Bereich des Chassis 2. Die oberen Profilabschnitte, bzw. die in der Seitansicht dargestellten Teleskopstangen, sind in dieser Lagerungsposition um etwa 180° gegenüber der Betriebsposition gedreht.

Aus den Figs. 6 und 7 wird ersichtlich, dass sowohl die oberen Profilabschnitte als auch die vorderen Profilabschnitte bei der Überführung zwischen Betriebsposition und Lagerungsposition die hinteren Profilabschnitte passieren.

## Patentansprüche

1. Faltbares Rahmengestell für ein Fahrzeug, insbesondere für einen Fahrradanhänger, mit mindestens einer mindestens vier Profilabschnitte aufweisenden Rahmenstruktur, wobei an jedem Profilabschnitt mindestens zwei Verbindungspunkte vorgesehen und benachbarte Profilabschnitte an einander zugeordneten Verbindungspunkten mindestens in einer Betriebsposition über gelenkige Verbindungsmittel miteinander verbunden sind, so dass sie einen geschlossenen Rahmen bilden, und wobei Mittel zum Aussteifen der Rahmenstruktur vorgesehen sind, **dadurch gekennzeichnet, dass** mindestens einer der Profilabschnitte ein erster Profilabschnitt und die dazu unmittelbar benachbarten Profilabschnitte zweite Profilabschnitte sind, mit denen der erste Profilabschnitt mindestens in der Betriebsposition verbunden ist, und dass der Abstand der Verbindungspunkte der zweiten Profilabschnitte, die den Verbindungspunkten des ersten Profilabschnitts zugeordnet sind, veränderlich und in Betriebsposition festlegbar ist.

2. Faltbares Rahmengestell nach Anspruch 1, **dadurch gekennzeichnet, dass** die Verbindung zwischen dem ersten Profilabschnitt und einem der beiden zweiten Profilabschnitte lösbar ist und/oder der erste Profilabschnitt zwischen seinen Verbindungspunkten auftrennbar ist.

3. Faltbares Rahmengestell nach einem der vorstehenden Ansprüche, **dadurch gekennzeichnet, dass** die Länge des ersten Profilabschnitts zwischen den Verbindungspunkten seiner benachbarten Profilabschnitte veränderbar ist, indem der Profilabschnitt insbesondere teleskopartig ausgebildet ist.

4. Faltbares Rahmengestell nach einem der vorstehenden Ansprüche, **dadurch gekennzeichnet, dass** die Position mindestens eines mit dem ersten Profilabschnitt verbundenen gelenkigen Verbindungsmittels veränderbar und in zumindest einer Position arretierbar ist.

5. Faltbares Rahmengestell nach einem der vorstehenden Ansprüche, **dadurch gekennzeichnet, dass** einer der Profilabschnitte durch ein Chassis oder durch Teile des Chassis des Fahrzeugs gebildet ist.

6. Faltbares Rahmengestell nach einem der vorstehenden Ansprüche, **gekennzeichnet durch** zwei jeweils achssymmetrisch zueinander an den Längsseiten des Rahmengestells angeordnete Rahmenstrukturen, wobei die Profilabschnitte jeweils einzelne Streben sind und mindestens zwei jeweils zueinander im Wesentlichen parallel geführte Streben beider Rahmenstrukturen über eine Querstrebe miteinander verbunden sind.

7. Faltbares Rahmengestell nach einem der Ansprüche 1 bis 5, **dadurch gekennzeichnet, dass** mindestens einer der Profilabschnitte, insbesondere alle Profilabschnitte, jeweils aus einem vierseitigen, insbesondere im Wesentlichen rechteckigen, Rahmen, gebildet sind.

8. Faltbares Rahmengestell nach einem der vorstehenden Ansprüche, **dadurch gekennzeichnet, dass** als Profilabschnitte der Rahmenstruktur(en) ein in Fahrtrichtung vorderer Profilabschnitt, ein sich daran anschließender oberer Profilabschnitt und ein sich daran anschließender hinterer Profilabschnitt vorgesehen sind, wobei die Länge des vorderen Profilabschnitt und die Länge des hinteren Profilabschnitts weniger als 25 % voneinander abweichen, und wobei insbesondere der vordere Profilabschnitt gleich lang oder länger ist als der in Fahrtrichtung hintere Profilabschnitt.

9. Faltbares Rahmengestell nach einem der vorstehenden Ansprüche, **dadurch gekennzeichnet, dass** als Mittel zum Aussteifen der Rahmenstruktur Mittel zur Versteifung der Gelenke vorgesehen sind.

10. Faltbares Rahmengestell nach einem der vorstehenden Ansprüche, **dadurch gekennzeichnet, dass** als Mittel zur Versteifung des Rahmengestells in der Betriebsposition mindestens zwei flexible, auf Zug beanspruchbare Elemente vorgesehen sind, wobei die auf Zug beanspruchbaren Element so angeordnet sind, dass die Profilabschnitte zueinander in ihrer Betriebsposition in der Ebene der Rahmenstruktur ausgesteift sind.

11. Ein- oder zweispuriger Fahrradanhänger, mit einem faltbaren Rahmengestell nach einem der vorstehenden Ansprüche.

12. Fahrradanhänger nach Anspruch 11, **gekennzeichnet durch** eine das Rahmengestell ummantelnde Hülle, insbesondere aus Stoff und/oder Kunststoff, die den von dem Rahmengestell in einer Betriebsposition aufgespannten Raum umschließt.

13. Fahrradanhänger nach Anspruch 12, **dadurch gekennzeichnet, dass** in oder an der Hülle Führungen für die Mittel zur Versteifung des Rahmengestells vorgesehen sind.

14. Fahrradanhänger nach Anspruch 12 oder 13, **dadurch gekennzeichnet, dass** die Mittel zur Versteifung des Rahmengestells durch die Hülle gebildet sind, wobei die Hülle dazu punktuell mit dem Rahmengestell verbunden ist.

15. Fahrradanhänger nach einem der Ansprüche 11 bis 14, **gekennzeichnet durch** Mittel zum Befestigen eines Schiebegriffs und zum Befestigen mindestens eines zusätzlichen Stützrades.
